# EUROPEAN PATENT SPECIFICATION

(11) **EP 1 498 288 B1**
(45) Date of publication and mention of the grant of the patent: **05.11.2008**
(21) Application number: 03712869.1
(22) Date of filing: 24.03.2003
(51) Int. Cl.: B60C 11/04, B60C 11/13

(54) **PNEUMATIC TIRE**
LUFTREIFEN
PNEUMATIQUE

(30) Priority: 28.03.2002 JP 2002092009
(43) Date of publication of application: 19.01.2005
(73) Proprietor: SUMITOMO RUBBER INDUSTRIES, LTD., Kobe-shi, Hyogo 651-0072 (JP); The Goodyear Tire & Rubber Company, Akron, OH 44316-0001 (US)
(72) Inventor: MIYABE, Saburo, 63457 Grossauheim (DE); ABE, Osamu, c/o Sumitomo Rubber Industries, Ltd., Kobe-shi, Hyogo 651-0072 (JP)
(74) Representative: Kutsch, Bernd
(86) International application number: PCT/JP2003/003551
(87) International publication number: WO 2003/082610

(56) References cited:
- WO-A-01/02194
- WO-A-97/46359
- DE-A1- 19 940 777
- JP-A- 4 043 104
- JP-A- 7 117 413
- JP-A- 7 195 912
- JP-A- 60 193 704
- JP-U- 6 055 811
- US-A- 5 394 915
- US-A- 6 119 745

## Description

### TECHNICAL FIELD

The present invention relates to a pneumatic tire capable of improving wet performance and noise performance while restricting degradations in steering stability, according to the preamble of claim 1.

### BACKGROUND ART

A pneumatic tire for use in a passenger car or similar is formed with a tread pattern on a tread surface thereof in which one or a plurality of peripherally directed grooves extending successively in the peripheral direction of the tire are formed. Drain efficiency is improved by mainly setting a groove capacity of the peripherally directed grooves to be large. With this arrangement, it is possible to achieve improvements in wet performance so that a velocity in which hydroplaning or similar occurs may be shifted to an even higher speed range.

However, simply setting the groove capacity of the peripherally directed grooves to be large will result in reduction in pattern rigidity, which will lead to a drawback that the steering stability performance is degraded. When running on a dry road surface, the peripherally directed grooves will generate air core resonance, thus leading to a drawback that the car-interior noise and the car-exterior noise are increased. In this manner, a contradictory relationship exists between wet performance and tire noise as well as steering stability, and there is a strong need for a tire capable of achieving improvements in both fields.

The present invention accordingly aims to provide a pneumatic tire capable of restricting degradations in pattern rigidity and occurrence of air core resonance and capable of improving wet performance and noise performance while restricting degradations in steering stability on the basis of a structure in which peripherally directed broad width grooves are provided on the tread surface while restricting groove widths and positions of placement thereof and in which ribs successively extending in the tire peripheral direction are formed on both sides of the broad width grooves without including any sipings, slots or other notches.

Document WO-A-01/02194 discloses the features of the preamble of claim 1.

### DISCLOSURE OF THE INVENTION

For achieving the above objects, the tire of the present invention is a pneumatic tire formed with peripherally directed grooves successively extending in a tire peripheral direction on a tread surface thereof, wherein the peripherally directed grooves include broad width grooves having a groove width corresponding to 4 to 20% of a tread grounding width and having a groove central line that is apart from a tire equator in a tire axial direction by a distance that corresponds to 5 to 30% of the tread grounding width, wherein an inner rib on the tire equator side and an outer rib on a tread grounding end side are formed on both sides of the broad width groove to successively extend in the tire peripheral direction without including any sipings, slots or other notches, and wherein a total length of groove widths in which the groove widths of the peripherally directed grooves are summed corresponding to 15 to 35% of the tread grounding width.

It should be noted that the broad width groove is favorably located further outside of a vehicle than the tire equator when the tire is mounted to a vehicle. It is further desirable that the outer rib and the inner rib have a rib width that corresponds to 2 to 6% of the tread grounding width. It is particularly desirable that the rib width of the outer rib is larger than the rib width of the inner rib.

As for the broad width grooves, an inclination angle θ1 of a groove wall on the tread grounding end side with respect to a normal line of the tread surface may be larger than an inclination angle θ2 of a groove wall on the tire equator side with respect to the normal line. The outer rib may be formed between the broad width groove and a narrow groove extending between the broad width groove and the tread grounding end. It is particularly preferable to form lateral grooves having a groove width of 3 to 7 mm at intervals between the narrow groove and the tread grounding end.

At a tire outside portion that is located further outside of the vehicle than the tire equator when the tire is mounted to a vehicle, a buttress region that is located further outside than 55% of the tread grounding width when seen from the tire equator and inside than 65% thereof may be formed as a peripherally directed successive portion including no grooves or notches extending obliquely with respect to the tire peripheral direction. This is helpful for reducing air resistance.

The tread surface is desirably formed as a non-symmetric pattern that is non-symmetric with respect to the tire equator and in which the groove width of the broad width grooves from among the peripherally directed grooves is largest.

### BRIEF DESCRIPTION OF THE DRAWINGS

Fig. 1 is an exploded view of a tread portion representing one embodiment of the present invention,
Fig. 2 is an enlarged sectional view of portion X-X in Fig. 1,
Fig. 3 is a sectional view of a tire of the present example in a normal state, and
Fig. 4(A) and Fig. 4(B) are partial plan views illustrating patterns of a tire according to a comparative example.

### Best Mode for Carrying Out the Invention

One embodiment of the present invention will now be explained on the basis of the drawings.

The present embodiment illustrates a case in which a tread surface 2 of the pneumatic tire of the present invention is formed as a non-symmetric pattern in which non-symmetric patterns are formed on the right and left of a tire equator C and in which a mounting direction to a vehicle is determined. More particularly, the present embodiment illustrates a case in which the tire is mounted to a vehicle in a direction with the portion of the tread surface 2 located on the left-handed side of the tire equator C being located outside of the vehicle while the right-handed side thereof being located inside of the vehicle.

The tread surface 2 is formed with a plurality of peripherally directed grooves 3 successively extending in a tire peripheral direction. In the illustrated case, the peripherally directed grooves 3 comprises a central groove 4 extending on the tire equator C, broad width grooves 5 formed on both sides thereof and narrow grooves 6 having a smallest groove width. The present embodiment illustrates a case in which all of the peripherally directed grooves 3 are formed as straight grooves linearly extending in the tire peripheral direction. Since such straight grooves exhibit higher drain efficiency when compared to zigzag grooves, it is possible to achieve high drain effects with smallest groove widths.

The central groove 4 is formed to have a groove width GW1 that corresponds to approximately 2 to 7% of the tread grounding width TW, and more preferably, to approximately 3 to 5%. A favorable groove depth is 6.0 to 9.0 mm, and more preferably 6.5 to 8.5 mm. A central groove 4 having such as groove width and groove depth will improve drain efficiency in the periphery of the tire equator at which a grounding pressure is high.

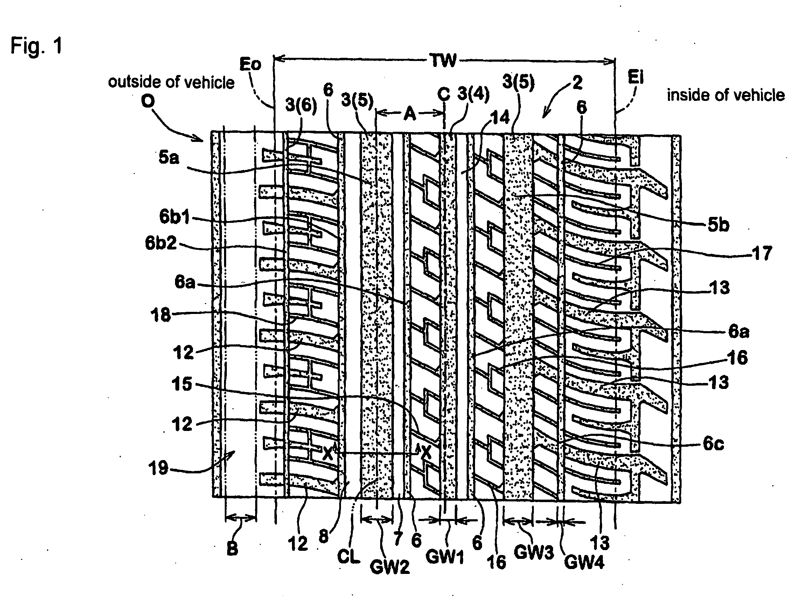

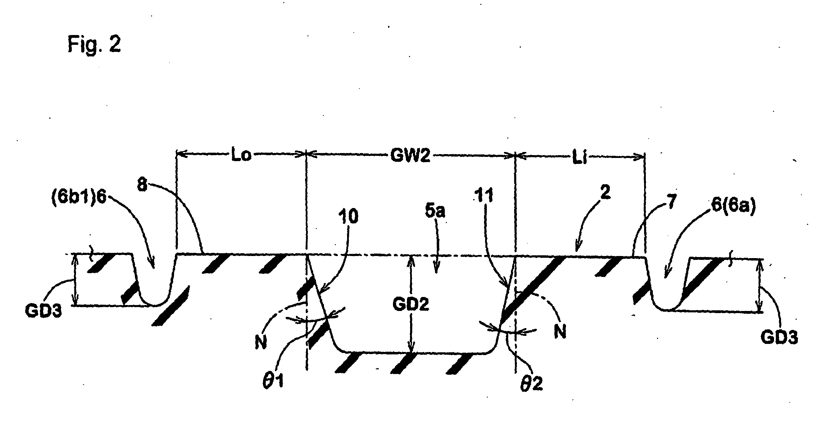

It should be noted that dimensions of respective parts such as groove widths and groove depths indicate values measured in a normal condition upon assembling a tire to a normal rim and filling the same with normal internal pressure, unless indicated otherwise. The groove width is measured as shown in Figs. 1 and 2 by measuring a distance between groove edges at right angles with respect to a groove central line thereof. The term "normal rim" denotes a rim with standards being defined for each tire within standardizing systems including standards on which the tires are based, such concretely being an ordinary rim according to JATMA, a "design rim" according to TRA and a "measuring rim" according to ETRTO. The term "normal internal pressure" is an air pressure that is defined by the standards for each tire, such concretely being a maximum air pressure according to JATMA, a maximum value as listed in the table "TIRE LOAD LIMITS AT VARIOUS COLD INFLATION PRESSURES" according to TRA and "inflation pressure" according to ETRTO, wherein it is defined to be 180 kPa for tires for use in a passenger car.

The term "tread grounding width" indicates a distance between both ends of a tread grounding surface in the tire axial direction when normal load is applied to tires in normal conditions. The term "normal load" denotes a load that is defined by the standards for each tire, such concretely being a maximum load capacity according to JATMA, a maximum value as listed in the table "TIRE LOAD LIMITS AT VARIOUS COLD INFLATION PRESSURES" according to TRA and "load capacity" according to ETRTO, wherein the load is defined to correspond to 88% of the above load for tires for use in a passenger car.

In the present embodiment, the broad width grooves 5 include an outer broad width groove 5a located further outside of the vehicle than the tire equator C and an inner broad width groove 5b located further inside of the vehicle than the tire equator C. In the present embodiment, both of the outer broad width groove 5a and the inner broad width groove 5b are arranged to have a very large width with their groove width GW2 and GW3 corresponding to 4 to 20% of the tread grounding width TW. Since the groove capacity of the broad width grooves 5a, 5b is large, it is possible to exhibit superior drain effects and high wet performance. While the groove depth GD2 of the broad width groove 5 is not particularly limited, it is preferably set to 6.0 to 9.0 mm, and more preferably, to 6.5 to 8.5 mm.

Here, when at least either one of the groove widths GW2 and GW3 becomes less than 4% of the tread grounding width TW, a tendency exists in which no sufficient groove capacity is secured. On the other hand, when this value exceeds 20%, the pattern rigidity of the tread surface 2 tends to be remarkably worsened. It is accordingly preferable that both of the groove widths GW2 and GW3 occupy 6 to 15%, and more preferably, 8 to 12% of the tread grounding width TW. It should be noted that the present embodiment illustrates a particularly preferable form in which the groove width GW2 of the outer broad width groove 5a is largest. With this arrangement, drain effects may be effectively exhibited at portions outside of the vehicle where the grounding pressure becomes high when performing turning movements, and the hydroplaning generating speed when performing turning movements can be shifted to an even higher speed range.

The outer broad width groove 5a from among the broad width grooves 5 is preferably arranged in that its groove central line CL is disposed away from the tire equator C in the tire axial direction by a distance A that corresponds to 5 to 30%, and more preferably 10 to 27%, and even more preferably 15 to 25% of the tread grounding width TW. Through various experiments that have been performed by the inventors, it has been found that when the distance A becomes less than 5% of the tread grounding width TW and the central groove 4 is provided, a land portion of small rigidity will be formed between the same and this groove so as to lead to degradations in pattern rigidity. On the other hand, when the distance A exceeds 30% of the tread grounding width TW, the broad width grooves 5 will come closer to the tread grounding end side at which a large grounding pressure is applied when performing turning movements. Consequently, a sense of rigidity when performing turning movements will be hardly gained so that the steering stability tends to be harmed. In the present embodiment, the inner broad width groove 5b and the outer broad width groove 5a are disposed to be at substantially symmetrical positions with the tire equator C being the center. With this arrangement, the drain performance may be favorably improved also inside of the vehicle. However, the present invention is not limited to such a form.

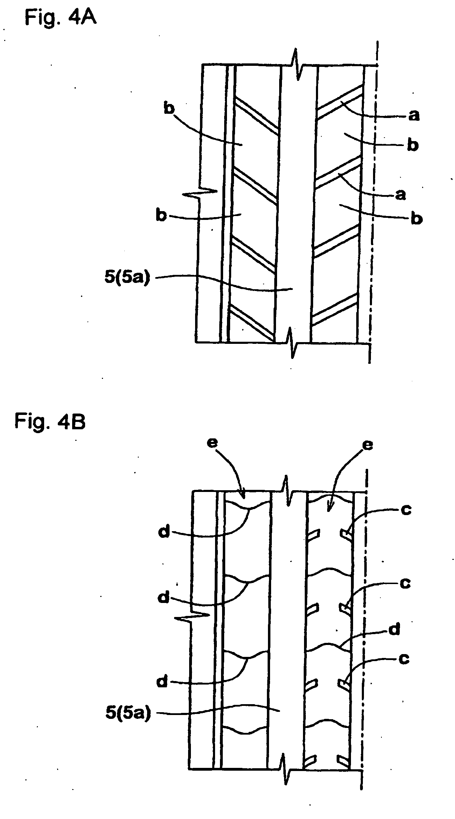

In the present embodiment, an inner rib 7 on the tire equator side and an outer rib 8 on the tread grounding side extending successively in the tire peripheral direction are formed on both sides of the outer broad width groove 5a having a largest groove width without including any sipings, slots, lateral grooves or other notches. Through various experiments that have been performed by the inventors, it has been found that where blocks b partitioned by lateral grooves a are provided on both sides of the broad width groove 5 as illustrated in Fig. 4(A), the blocks b will be oscillated upon repeating grounding and release with the road surface when performing running. Such oscillation of the blocks b will apply vibration to air passing through the broad width groove 5 so that air core resonance within the broad width groove 5 is promoted. Further, also in the case of ribs e arranged in a successive manner in the tire peripheral direction on both sides of the broad width groove 5 as shown in Fig. 4(B), the provision of slots c or sipings d will still lead to worsening of the noise performance though being somewhat superior when compared to the arrangement of Fig. 4(A).

In contrast thereto, the present invention is arranged to form the inner rib 7 and the outer rib 8 on both sides of the outer broad width groove 5a that are of high rigidity and free of any sipings or slots that may originate in deformation or oscillation. With this arrangement, oscillation of ribs 7 and 8 at the time of running may be reliably restricted and the vibration applying force to air inside of the outer broad width groove 5a may be reduced. Accordingly, the pneumatic tire of the present invention is capable of reducing air core resonance while achieving improvements in wet performance by securing a large groove capacity for the outer broad width groove 5b so as to improve passing noise to be of a lower level.

The present embodiment illustrates a preferred case in which the inner and outer ribs 7 and 8 respectively have constant rib widths Li, Lo (as shown in Fig. 2) that extend linearly and successively in the tire peripheral direction. While the rib widths Li, Lo are not particularly limited, it is preferable to set them to 2 to 6%, and more preferably 4 to 6% of the tread grounding width TW. When the rib widths Li, Lo are less than 2% of the tread grounding width TW, the rib rigidity tends to be worsened and the effect of reducing oscillation of the ribs when performing running is somewhat degraded. On the other hand, when this value exceeds 6%, the rib rigidity will be excessively increased since no sipings or similar are provided, so that envelope effects or riding comfort are spoiled. Noise performances at low frequencies are also badly affected.

It is preferable to particularly set the rib width Lo of the outer rib 8 to be larger than the rib width Li of the inner rib 7. In this case, since the outer rib 8 with the large rib width Lo is positioned at portions at which the grounding pressure becomes large when performing turning movements, degradations in wear resistance or degradations in grip force when performing turning movements can be effectively prevented. It is particularly preferable to set a rib width ratio between the inner and outer ribs 7, 8 (Lo/Li) to 1.05 to 1.40 and further to 1.10 to 1.30. It should further be noted that the rib width of the ribs 7, 8 might be varied depending on the narrow grooves 6a, 6b1 or others.

As illustrated in Fig. 2, the outer broad width groove 5a includes a groove wall 10 on the tread grounding end side and a groove wall 11 on the tire equator side, wherein both are inclined in directions in which the groove widths are expanded towards the tread surface 2. In the present embodiment, an inclination angle θ1 of a groove wall 10 on the tread grounding end side is particularly made larger than an inclination angle θ2 of a groove wall 11 on the tire equator side. Such inclinations of the groove walls relatively improve the rigidity of the outer rib 8, which is exposed to much of the grounding pressure when performing turning movements, than that of the inner rib 7. Such an arrangement consequently contributes to improvements in steering stability while it is further useful in improving wear resistance on the outer rib 8 side. The inclination angles θ1, θ2 are inclination angles with respect to a normal line N of the tread surface 2 running through an upper edge of the groove wall, wherein in the present embodiment, θ1 is set to 12° and θ2 to 10°. Though not particularly limited, a difference between inclination angles of the groove walls (θ1-θ2) is desirably set to approximately 2 to 5° since a too large difference is apt to harm a rigidity balance of the ribs.

The narrow grooves 6 is illustrated to include central narrow grooves 6a, 6a formed between the central grooves 3 and the broad width grooves 5, a first outer narrow groove 6b1 and a second outer narrow groove 6b2 extending between the outer broad width groove 5a and the tread grounding end Eo and an inner narrow groove 6c extending between the inner broad width groove 5b and the tread grounding end Ei, and there are formed five of them all together on the tread surface 2.

In the present embodiment, the outer rib 8 is formed between the outer broad width groove 5a and the first outer narrow groove 6b1. Similarly, the inner rib 7 is formed between the outer broad width groove 5a and the central narrow groove 6a extending between the outer broad width groove 5a and the central groove 4.

The groove width GW4 of these narrow grooves 6 is set to be smaller than that of the central groove 4, that is, it is set to have a smallest groove width from among the peripherally directed grooves 3. The groove width GW4 of these narrow grooves 6 is formed to be approximately 0.5 to 4.0%, and more preferably approximately 0.7 to 2.5% of the tread grounding width TW. A favorable groove depth is 1.0 to 5.0 mm, and more preferably 1.5 to 4.0 mm. A groove depth GD3 is desirably set to be 10 to 85%, and more preferably approximately 15 to 60% of a groove depth GD2 of the broad width grooves 5. In the present embodiment, the depth is set to approximately 2 to 3 mm. When the groove depth GD3 of the narrow grooves 6 exceeds 85% of the groove depth GD2 of the broad width grooves 5, it is not favorable since the rigidity of the inner and outer ribs 7, 8 tends to be degraded.

The pneumatic tire of the present invention is arranged in that the total length of the groove widths obtained by summing up groove widths of the peripherally directed grooves 3 (that is, total lengths of groove widths of the central groove 4, the inner and outer broad width grooves 5b, 5a and the five narrow grooves 6) corresponds to 15 to 35% of the tread grounding width TW. When the total length of the groove widths becomes less than 15% of the tread grounding width TW, the overall groove capacity of the peripherally directed components will fall short and it will become difficult to improve the drain performance in a well-balanced manner. On the other hand, a value exceeding 35% will lead to degradations in pattern rigidity while drain performances may be improved, and the steering stability will be worsened. In view of such fact, it is particularly desirable to set the total length of groove widths to 20 to 34%, and more preferably 25 to 33% of the tread grounding width TW. With this arrangement, it is possible to improve the wet performance and steering stability in a well-balanced manner.

In the present embodiment, there are respectively formed outer lateral grooves 12 and inner lateral grooves 13 that continue to the tread grounding ends Eo, Ei. The outer lateral grooves 12 provided outside of the vehicle at intervals extend between the first outer narrow groove 6b1 and the tread grounding end Eo. The inner lateral grooves 13 provided inside of the vehicle at intervals extend between the inner broad width groove 5b and the tread grounding end Ei. The groove width of the respective lateral grooves 12, 13 is desirably set to 3 to 7 mm, and more preferably to approximately 3.5 to 6.0 mm. With this arrangement, the drain properties proximately of the tread grounding ends are improved so as to further improve the wet performance.

By particularly setting the groove capacity of the outer lateral grooves 12 continuing to the tread grounding ends Eo that is located outside of the vehicle to be large, the hydroplaning resistance performance when performing turning movements can be further improved. It should be noted that by providing the inner and outer ribs 7, 8 of large rigidity on both sides of the outer broad width groove 5a in the present embodiment, much of the grounding pressure could be borne by the ribs 7, 8. Accordingly, the provision of lateral grooves 12 of broad width will not lead to degradations in rigidity of the outer shoulder portion. Since the rib width Lo of the outer rib 8 is set to be larger than the rib width Li of the inner rib 7, it is also useful in restricting excitation of noise caused by the lateral grooves 12. The rigidity of the blocks can be suitably adjusted by forming small grooves 17, 18 such as narrow grooves or sipings extending in the tire axial direction and/or the tire peripheral direction between the lateral grooves 12, 12 and lateral grooves 13, 13.

Intermediate lateral grooves 15 having a groove width that is smaller than that of the outer lateral grooves 12 are formed between the intermediate narrow groove 6a outside of the vehicle and the central groove 4. Such central lateral grooves 15 extend at positions proximate to the tire equator C. Thus, by setting the groove width to be small, it is possible to increase the rigidity at this portion and to prevent worsening of braking performance or traction performance. It is desirable to set the groove width to 0.8 to 3.0 mm, and more preferably to approximately 1.0 to 2.5 mm. It should be noted that the same applies to the intermediate lateral grooves 16 extending between the inner broad width groove 5b and the intermediate lateral groove 6a.

There is illustrated a case in which an auxiliary rib 14 is formed to successively extend in the tire peripheral direction between the central groove 4 and the intermediate narrow groove 6a adjoining this central groove 4 on the inner side of the vehicle without comprising any sipings, slots or other notches. This auxiliary rib 14 may be formed to have a rib width that is equivalent to those of the outer rib 8 or the inner rib 7. The auxiliary rib 14 serves to prevent the pattern rigidity of the tread surface 2 further inside of the vehicle than the tire equator C from becoming remarkably smaller than the pattern rigidity outside of the vehicle, and thus serves to prevent occurrence of uneven wear or worsening of steering stability.

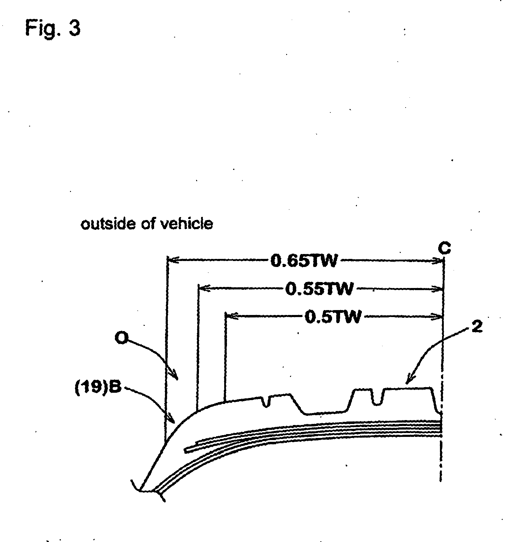

As illustrated in Figs. 1 and 3, the present embodiment is arranged in that at a tire outside portion O that is located further outside of the vehicle than the tire equator C when the tire is mounted to the vehicle, an inner buttress region B that is located further outside than 55% of the tread grounding width but further inside than 65% thereof when seen from the tire equator C is formed as a peripherally directed succeeding portion 19 including no grooves or notches that are inclined with respect to the tire peripheral direction.

Conventional tires are often provided with designs such as marks, letters or decorative notches at this buttress region B. However, upon performing various experiments, the inventors of the present invention have found that concaves and convexes caused through such letters or similar caused an increase in air resistance since running air would directly hit against these portions to cause crosscurrent. Accordingly, by forming the buttress region B as a peripherally directed succeeding portion 19 as in the present embodiment, it is possible to restrict occurrence of crosscurrent at the buttress region B during running. It is consequently possible to reduce air resistance of the tire itself while it is further possible to reduce passing noise by cutting wind roar or similar. It should be noted that the peripherally directed succeeding portion 19 might include grooves or ribs that successively extend in the peripheral direction. This is because such grooves or ribs will not substantially contribute to increase of air resistance.

While a particularly preferred form of embodiment of the present invention has been so far been described in details, the present invention is not limited to the illustrated embodiment alone but may be performed upon variously modifying the same. For instance, one or all of the peripherally directed grooves may be bent in a zigzag style (including waveforms). Positions of groove central lines are determined to be at centers of oscillation of zigzags.

### Example

Radial tires for use in a passenger vehicle of the basic arrangement of Fig. 1 and having a tire size of 195/ 65R15 have been manufactured on trial for performing tests wet performance, steering stability and noise performance. Similar tests were performed with tires having patterns as illustrated in Figs. 4(A) and 4(B) for comparing performances. It should be noted that the comparative examples were arranged in that only both sides of the outer broad width groove were varied from that of the example while the remaining arrangements were common to both. Specifications of the tires were as follows.

### Example

| | |
|---|---|
| Tread grounding width TW : | : 142 mm |
| Groove width GW1 of central groove | : 7.5 mm [5.3%] |
| Groove depth of central groove | : 8.0 mm |
| Groove width GW2 of outer broad width groove | : 14.0 mm [9.9%] |
| Groove depth of outer broad width groove | : 8.0 mm |
| Distance A | : 32 mm [22.5%] |
| Groove width GW3 of inner broad width groove | : 12.0 mm [8.5%] |
| Groove depth of inner broad width groove | : 8.0 mm |
| Groove width GW4 of narrow groove | : 2.0 mm [1.4%] |
| Groove depth of narrow groove | : 3.0 mm |
| Ratio {(GW1+GW2+GW3+5xGW4)/TW} | : 29.2% |
| Outer rib width Lo | : 8.0 mm [5.6%] |
| Inner rib width Li | : 6.5 mm [4.6%] |
| Inclination angle of groove wall θ1 | : 12° |
| Inclination angle of groove wall θ2 | : 10° |
| Groove width of outer lateral groove | : 4.5 mm |

Numeric values within brackets [] indicate ratios (%) with respect to the tread grounding width TW. Methods for testing were as follows. In the comparative examples 1 and 2, the width of the land portion on both sides of the outer broad width groove was defined to be 25 mm.

### Wet Performance

A vehicle mounted with sample tires (engine displacement 2000 cc, rim 6JJ, internal pressure 220 kPa) was employed to make it enter a course in which a puddle having a water depth of 5 mm and a length of 20m was provided on an asphalt road surface having a radius of 100 m while increasing its speed in a stepwise manner. Lateral accelerations (lateral G) were respectively measured to calculate average lateral G of the front wheels at speeds ranging from 50 to 80 km/h (lateral hydroplaning test). The results are indicated as indices wherein the Comparative Example 1 is defined as 100. The larger the numeric values are, the better it is.

### Steering Stability Performance

The above vehicle was used for performing test running on a dry asphalt road surface of the tire test course. Respective properties related to steering response, sense of rigidity and grip are indicated as indices of sensory evaluations of a driver wherein the Comparative Example 1 is defined as 100. The larger the numeric values are, the better it is.

### Noise Performance

Noises generated when using the above vehicle for making it run on a dry asphalt road at a speed of 50 km/h were measured by using a microphone disposed on a position right to the driver's seat for indicating them as indices wherein a reciprocal of the noise db(A) of the Comparative Example 1 is defined as 100. The larger the numeric values are, the better it is.

The test results as indicated in Table 1.

**Table 1**

| | Comparative Example 1 | Comparative Example 2 | Example |
|---|---|---|---|
| Wet performance (index) | 100 | 98 | 102 |
| Steering stability (index) | 100 | 102 | 105 |
| Noise performance (index) | 100 | 105 | 110 |

It could be remarkably confirmed from the test results that the tire of the present example has achieved improvements in wet performance and noise performance while restricting degradations in steering stability when compared to tires of the comparative examples.

### Industrial Applicability

The pneumatic tire according to the present invention is arranged in that broad width grooves extending in peripheral directions while restricting groove widths and positions of placement thereof are formed on a tread surface wherein inner and outer ribs successively extending in the tire peripheral direction are formed on both sides of the broad width groove without forming any sipings, slots or other notches. With this arrangement, it is possible to improve wet performance and noise performance while restricting degradations in steering stability, particularly by restricting degradations in pattern rigidity while sufficiently securing drain performance and also preventing occurrence of air core resonance.

## Claims

1. A pneumatic tire formed with peripherally directed grooves (3) successively extending in a tire peripheral direction on a tread surface (2) thereof,
wherein the peripherally directed grooves (3) include an outer broad width groove (5a) and an inner broad width groove (5b) each having a groove width (GW2, GW3) corresponding to 4 to 20% of a tread grounding width and having a groove central line (CL) that is apart from a tire equator in a tire axial direction by a distance that corresponds to 5 to 30% of the tread grounding width (TW), **characterized in that**
an inner rib (7) on the tire equator side and an outer rib (8) on a tread grounding end side are formed on both sides of the outer broad width groove (5a) to successively extend in the tire peripheral direction without including any sipings, slots or other notches, and **in that**
a total length of groove widths in which the groove widths of the peripherally directed grooves are summed corresponds to 15 to 35% of the tread grounding width (Tw).

2. The pneumatic tire claimed in Claim 1, wherein the outer broad width groove (5a) is located further outside of the vehicle than the tire equator (C) when the tire is mounted to a vehicle.

3. The pneumatic tire claimed in Claim 1 or 2, wherein both of the outer rib (8) and the inner rib (7) have a rib width that corresponds to 2 to 6% of the tread grounding width (TW).

4. The pneumatic tire claimed in any one of Claims 1 to 3, wherein the outer rib (8) has a rib width that is larger than that of the inner rib (7).

5. The pneumatic tire claimed in any one of Claims 1 to 4, wherein an inclination angle θ1 of a groove wall (10) on the tread grounding end side with respect to a normal line of the tread surface is larger than an inclination angle θ2 of a groove wall (11) on the tire equator side with respect to the normal line.

6. The pneumatic tire claimed in any one of Claims 1 to 5, wherein the outer rib (8) is formed between the outer broad width groove (5a) and a narrow groove (6) extending between the outer broad width groove (5a) and the tread grounding end, and
wherein lateral grooves (12) having a groove width of 3 to 7 mm are formed at intervals between the narrow groove (6) and the tread grounding end.

7. The pneumatic tire claimed in any one of Claims 1 to 6, wherein at a tire outside portion (o) that is located outside of the vehicle of the tire equator when the tire is mounted to a vehicle, a buttress region (B) that is located further outside than 55% of the tread grounding width from the tire equator (C) and further inside than 65% thereof is formed as a peripherally directed successive portion including no grooves or notches extending obliquely with respect to the tire peripheral direction.

8. The pneumatic tire claimed in any one of Claims 1 to 7, wherein the tread surface is formed as a non-symmetric pattern that is non-symmetric with respect to the tire equator (C) and wherein the groove width of the broad width grooves (5) among the peripherally directed grooves is largest

## Patentansprüche

1. Luftreifen, ausgebildet mit umfangsgerichteten Rillen (3), die sich aufeinanderfolgend in einer Reifenumfangsrichtung auf einer Lauffläche (2) davon erstrecken,
wobei die umfangsgerichteten Rillen (3) eine äußere breite Rille (5a) und eine innere breite Rille (5b) umfassen, die jeweils eine Rillenbreite (GW2, GW3) aufweisen, die 4 bis 20% einer Laufflächenbodenkontaktbreite entspricht, und eine Rillenmittellinie (CL) aufweisen, die von einem Reifenäquator in einer Reifenaxialrichtung um einen Abstand entfernt ist, der 5 bis 30% der Laufflächenbodenkontaktbreite (TW) entspricht, **dadurch gekennzeichnet, dass**
eine innere Rippe (7) auf der Reifenäquatorseite und eine äußere Rippe (8) auf einer Laufflächenbodenkontaktendseite zu beiden Seiten der äußeren breiten Rille (5a) geformt sind, um sich aufeinanderfolgend in der Reifenumfangsrichtung zu erstrecken, ohne jegliche Lamellen, Schlitze oder andere Kerben zu enthalten, und dass
eine Gesamtlänge von Rillenbreiten, wobei die Rillenbreiten der umfangsgerichteten Rillen addiert sind, 15 bis 35% der Laufflächenbodenkontaktbreite (TW) entspricht.

2. Luftreifen nach Anspruch 1, wobei die äußere breite Rille (5a) in Bezug auf das Fahrzeug weiter nach außen gelegen ist als der Reifenäquator (C), wenn der Reifen an einem Fahrzeug montiert ist.

3. Luftreifen nach Anspruch 1 oder 2, wobei sowohl die äußere Rippe (8) als auch die innere Rippe (7) eine Rippenbreite haben, die 2 bis 6% der Laufflächenbodenkontaktbreite (TW) entspricht.

4. Luftreifen nach einem der Ansprüche 1 bis 3, wobei die äußere Rippe (8) eine Rippenbreite aufweist, die größer als die der innneren Rippe (7) ist.

5. Luftreifen nach einem der Ansprüche 1 bis 4, wobei ein Steigungswinkel θ1 einer Rillenwand (10) an der Laufflächenbodenkontaktendseite in Bezug zu einer Normallinie der Profilfläche größer ist als ein Steigungswinkel θ2 einer Rillenwand (11) an der Reifenäquatorseite in Bezug auf die Normallinie.

6. Luftreifen nach einem der Ansprüche 1 bis 5, wobei die äußere Rippe (8) zwischen der äußeren breiten Rille (5a) und einer schmalen Rille (6), die sich zwischen der äußeren breiten Rille (5a) und dem Laufflächenbodenkontaktende erstreckt, gebildet ist, und
wobei Seitenrillen (12) mit einer Rillenbreite von 3 bis 7 mm in Abständen zwischen der schmalen Rille (6) und dem Laufflächenbodenkontaktende gebildet sind.

7. Luftreifen nach einem der Ansprüche 1 bis 6, wobei an einem Reifenaußenteil (O), das sich in Bezug auf das Fahrzeug auswärts vom Reifenäquator befindet, wenn der Reifen an einem Fahrzeug montiert ist, ein Stützbereich (B), der sich weiter nach außen als 55% der Laufflächenbodenkontaktbreite von dem Reifenäquator (C) und weiter nach innen als 65% davon befindet, als ein umfangsgerichteter aufeinanderfolgender Teil ausgebildet ist, der keine Rillen oder Kerben enthält, die in Bezug zur Reifenumfangsrichtung schräg verlaufen.

8. Luftreifen nach einem der Ansprüche 1 bis 7, wobei die Profilfläche als asymmetrisches Muster ausgebildet ist, das asymmetrisch in Bezug auf den Reifenäquator (C) ist, und wobei die Rillenbreite der breiten Rillen (5) unter den umfangsgerichteten Rillen am größten ist.

## Revendications

1. Bandage pneumatique configuré avec des rainures (3) à orientation périphérique, s'étendant successivement dans la direction périphérique du bandage pneumatique sur la surface de bande de roulement (2) de ce dernier,
dans lequel les rainures à orientation périphérique (3) englobent une rainure à grande largeur externe (5a) et une rainure à grande largeur interne (5b) possédant chacune une largeur de rainure (GW2, GW3) qui représente de 4 à 20 % de la largeur de la bande de roulement entrant en contact avec le sol et possédant une ligne médiane de rainure (CL) qui s'écarte du plan équatorial du bandage pneumatique dans la direction axiale de ce dernier sur une distance qui représente de 5 à 30 % de la largeur de bande de roulement entrant en contact avec le sol (TW), **caractérisé**
**en ce qu'**on forme une nervure interne (7) du côté du plan équatorial du bandage pneumatique et une nervure externe (8) du côté de l'extrémité de la bande de roulement entrant en contact avec le sol sont formées des deux côtés de la rainure à grande largeur externe (5a) pour s'étendre successivement dans la direction périphérique du bandage pneumatique, sans prendre en compte une quelconque lamelle, fente ou autre encoche ; et
**en ce que** l'étendue totale des largeurs de rainures, correspondant à l'addition des largeurs des rainures à orientation périphérique, représente de 15 à 35 % de la largeur de bande de roulement entrant en contact avec le sol (TW).

2. Bandage pneumatique selon la revendication 1, dans laquelle la rainure à grande largeur externe (5a) est disposée plus à l'extérieur du véhicule par rapport au plan équatorial du bandage pneumatique (C) lorsque le bandage pneumatique est monté sur un véhicule.

3. Bandage pneumatique selon la revendication 1 ou 2,
dans lequel, à la fois la nervure externe (8) et la nervure interne (7) possèdent une largeur de nervure qui représente de 2 à 6 % de la largeur de bande de roulement entrant en contact avec le sol (TW).

4. Bandage pneumatique selon l'une quelconque des revendications 1 à 3, dans lequel la nervure externe (8) possède une largeur de nervure qui est supérieure à celle de la nervure interne (7).

5. Bandage pneumatique selon l'une quelconque des revendications 1 à 4, dans lequel l'angle d'inclinaison θ1 que forme une paroi de rainure (10), du côté de l'extrémité de la bande de roulement entrant en contact avec le sol, par rapport à une ligne perpendiculaire à la surface de la bande de roulement est supérieur à l'angle d'inclinaison θ2 que forme une paroi de rainure (11) du côté du plan équatorial du bandage pneumatique, par rapport à la ligne perpendiculaire.

6. Bandage pneumatique selon l'une quelconque des revendications 1 à 5, dans lequel la nervure externe (8) est formée entre la rainure à grande largeur externe (5a) et une rainure étroite (6) s'étendant entre la rainure à grande largeur externe (5a) et l'extrémité de la bande de roulement entrant en contact avec le sol, et
dans lequel on forme des rainures latérales (12) possédant une largeur de rainure de 3 à 7 mm par intervalles entre la rainure étroite (6) et l'extrémité de la bande de roulement entrant en contact avec le sol.

7. Bandage pneumatique selon l'une quelconque des revendications 1 à 6, dans lequel, à une portion externe (O) qui est disposée à l'extérieur du véhicule dans le plan équatorial du bandage pneumatique lorsque le bandage pneumatique est monté sur un véhicule, on forme une zone d'épaulement (B) qui est disposée à une distance supérieure à 55 % de la largeur de la bande de roulement entrant en contact avec le sol, par rapport au plan équatorial du bandage pneumatique (C) et, à une distance, vers l'intérieur, qui est supérieure à 65 % de ladite largeur, on forme une zone d'épaulement sous la forme d'une portion successive à orientation périphérique, en l'absence de rainure ou d'encoche, s'étendant en oblique par rapport à la direction périphérique du bandage pneumatique.

8. Bandage pneumatique selon l'une quelconque des revendications 1 à 7, dans lequel la surface de la bande de roulement présente une configuration asymétrique qui est asymétrique par rapport au plan équatorial du bandage pneumatique (C), et dans lequel la largeur des rainures à grande largeur (5) est maximale dans les rainures à orientation périphérique.
